# EUROPÄISCHE PATENTANMELDUNG

(11) **EP 3 550 308 A1**
(43) Veröffentlichungstag der Anmeldung: **09.10.2019**
(21) Anmeldenummer: 18165860.0
(22) Anmeldetag: 05.04.2018
(51) Int. Cl.: G01N 35/10, G01N 35/00

(54) **LABORANALYSESYSTEM MIT VERBESSERTER PROBENPIPETTIERUNG**

(71) Anmelder: Siemens Healthcare Diagnostics Products GmbH, 35041 Marburg (DE)
(72) Erfinder: Buchwald, Markus, 65760 Eschborn (DE); Solbach, David, 60316 Frankfurt (DE)

(57) **Zusammenfassung**

Laboranalysesystem umfassend
a. eine Mehrzahl von Analysegeräten, wobei jedes Analysegerät eine Steuereinheit, mindestens eine Pipettiervorrichtung mit einer senkrecht verfahrbaren Pipettiernadel zur Entnahme eines Probenflüssigkeitsvolumens aus einem Probengefäß und mindestens eine Analysevorrichtung zur Analyse einer Probenflüssigkeit aufweist;
b. eine Bildaufnahmestation zur Aufnahme von Bildern von mit Probenflüssigkeit gefüllten Probengefäßen und eine dazugehörige Bildauswertevorrichtung; und
c. eine Transportvorrichtung für Probengefäße, an die alle Analysegeräte und die Bildaufnahmestation angebunden sind,dadurch gekennzeichnet, dassdas Laboranalysesystem ferner eine Datenübertragungsvorrichtung, mit der Probengefäß-spezifische Informationen aus der Bildauswertevorrichtung an die Steuereinheit mindestens eines Analysegerätes übermittelbar sind, umfasst und wobei die Steuereinheit des mindestens einen Analysegerätes, an die Probengefäß-spezifische Informationen aus der Bildauswertevorrichtung übermittelbar sind, so konfiguriert ist, dass sie ein Verfahren mit den folgenden Schritten steuert:
• Auswerten der Probengefäß-spezifischen Informationen aus der Bildauswertevorrichtung und Ermitteln eines oder mehrerer Probengefäß-spezifischer Parameter für den Betrieb der Pipettiervorrichtung bei der Entnahme eines Probenflüssigkeitsvolumens aus einem spezifischen Probengefäß, und
• Steuerung des Betriebs der Pipettiervorrichtung bei der Entnahme eines Probenflüssigkeitsvolumens aus einem spezifischen Probengefäß durch Anwendung der ermittelten Probengefäß-spezifischen Parameter,wobei die Probengefäß-spezifischen Informationen, die von der Bildauswertevorrichtung an die Steuereinheit des mindestens einen Analysegerätes übermittelbar sind, ausgewählt sind aus der Gruppe Füllstandhöhe der Probenflüssigkeit und Höhe von Trennschichten innerhalb der Probenflüssigkeit und wobei ein Parameter, der für den Betrieb der Pipettiervorrichtung bei der Entnahme eines Probenflüssigkeitsvolumens aus einem spezifischen Probengefäß ermittelt wird, der maximale senkrechte Verfahrweg der Pipettiernadel für die Positionierung der Pipettiernadel in einer Entnahmeposition ist.

## Beschreibung

Die Erfindung liegt auf dem Gebiet der Laborautomatisierung und betrifft eine Laboranalysesystem, in dem mehrere Analysegeräte und eine Bildaufnahmestation an einer Transportvorrichtung für Probengefäße angebunden sind und in dem Probengefäß-spezifische Informationen, die in der Bildaufnahmestation ermittelt werden, für die Steuerung der Pipettiervorrichtungen in den Analysegeräten verwendet werden.

In der modernen Laborautomatisierung werden automatische Analysegeräte, wie sie routinemäßig in der Analytik, der Forensik, der Mikrobiologie und der klinischen Diagnostik Verwendung finden und die jeweils in der Lage sind, eine Vielzahl von Nachweisreaktionen und Analysen mit einer Vielzahl von Proben durchzuführen, an eine Prozessstraße angebunden, um einen höheren Probendurchsatz bei gleichzeitiger Erhaltung der Laborflexibilität zu erzielen. Ein solches Laboranalysesystem umfasst in der Regel eine Mehrzahl gleich- oder verschiedenartiger Analysegeräte, die alle an eine Transportvorrichtung für Probengefäße angebunden sind. Ein Probengefäß mit einer Probe, mit der mehrerer Teste durchgeführt werden sollen, wird entlang der Transportvorrichtung nacheinander zu den Analysegeräten transportiert, in denen die geforderten Teste durchgeführt werden. In jedem Analysegerät wird dann mit Hilfe einer Pipettiervorrichtung eine Teilmenge der Probe aus dem Probengefäß entnommen und dem oder den angeforderten Testverfahren unterzogen.

In einem automatischen Analysegerät sind typischerweise diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen, in einem Gerätegehäuse untergebracht. Die Geräte umfassen ferner eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß zu einem Testansatz vermischt wird, wodurch eine biochemische Reaktion in Gang gesetzt wird, die eine messbare Veränderung einer optischen Eigenschaft des Reaktionsansatzes bewirkt. Die Photometrie untersucht und nutzt die Schwächung eines Lichtstroms beim Durchtritt durch ein absorbierendes und/oder streuendes Medium. Je nach Art der ausgelösten biochemischen oder biophysikalischen Reaktion kommen unterschiedliche photometrische Messverfahren zum Einsatz, die die Messung eines trüben flüssigen Testansatzes ermöglichen.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte. Ist das Analysegerät Teil eines Laboranalysesystems kann auch vorgesehen sein, dass die probenspezifischen Messwerte über eine Datenleitung an die zentrale Steuereinheit des Laboranalysesystems übermittelt werden und von dort aus über ein Ausgabemedium an einen Benutzer geliefert werden.

Es gibt Laboranalysesysteme, die über eine Bildaufnahmestation verfügen, die als separates Modul ebenfalls an die Transportvorrichtung für die Probengefäße angebunden ist. Die Bildaufnahmestation mit dazugehöriger Bildauswertevorrichtung ist üblicherweise am Beginn des Transportweges vorgesehen und dient der Aufnahme von Bildern von mit Probenflüssigkeit gefüllten Probengefäßen. Ein für eine derartige Bildaufnahmestation geeignetes Bildaufnahmegerät ist zum Beispiel in der WO-A1-03/060483 beschrieben.

In der EP-A2-2151690 ist ein Laboranalysesystem beschrieben, das
a. eine Mehrzahl von Analysegeräten, wobei jedes Analysegerät eine Steuereinheit, mindestens eine Pipettiervorrichtung mit einer Pipettiernadel zur Entnahme eines Probenflüssigkeitsvolumens aus einem Probengefäß und eine Analysevorrichtung zur Analyse einer Probenflüssigkeit aufweist;
b. eine Bildaufnahmestation zur Aufnahme von Bildern von mit Probenflüssigkeit gefüllten Probengefäßen und eine dazugehörige Bildauswertevorrichtung; und
c. eine Transportvorrichtung für Probengefäße, an die alle Analysegeräte und die Bildaufnahmestation angebunden sind,
umfasst.

In dem Laboranalysesystem gemäß EP-A2-2151690 werden in der Bildaufnahmestation anhand eines Bildes eines Probengefäßes der Füllstand und schließlich das Gesamtprobenvolumen und das Vorhandensein oder Fehlens eines Blutkuchens als Probengefäß-spezifische Parameter ermittelt. Anhand dieser Probengefäß-spezifischen Parameter ermittelt die zentrale Steuereinheit des Laboranalysesystems, die mit allen Analysegeräten, mit der Bildaufnahmestation und mit der Transportvorrichtung für Probengefäße verbunden ist, ob für die für die spezifische Probe vorgesehenen Analysen genügend Probenflüssigkeit vorhanden ist und generiert entsprechende Analyseaufträge, die mit der Probengefäß-Identifikationsnummer abgespeichert werden. Gelangt nun ein Probengefäß in eines der Analysegeräte, wird geprüft, ob ein Analyseauftrag vorliegt, und es wird eine in dem Analyseauftrag enthaltene Instruktion über das zu entnehmende Probenvolumen umgesetzt, indem eine Pipettiernadel in das Probengefäß eingeführt und ein vorgegebenes Volumen entnommen wird.

Problematisch ist, dass es trotz der Bestimmung der oben genannten Probengefäß-spezifischen Parameter (Füllstand, Gesamtprobenvolumen, Vorhandensein oder Fehlens eines Blutkuchens) in der Bildaufnahmestation und den dann in der zentralen Steuereinheit des Laboranalysesystems generierten Analyseaufträgen (die letztendlich die Anweisung enthalten, ob und wieviel Probenvolumen von einer Pipettiervorrichtung eines Analysegeräts aus einem spezifischen Probengefäß entnommen werden sollen), im Moment der Probenentnahme in einem Analysegerät passieren kann, dass nicht genügend geeignetes Probenmaterial vorliegt. Insbesondere bei sedimentierten oder mit Trennmitteln vermischten Blutproben liegen in dem Probengefäß verschiedene Schichten vor, die nicht alle gleichermaßen für die gewünschten Analysen geeignet sind bzw. deren Aufnahme in die Pipettiernadel verhindert werden soll, weil ein Verstopfen der Pipettiernadel droht. Sowohl die Entnahme von ungeeignetem Probenmaterial, die letztendlich zu einer Fehlbestimmung führen kann, als auch ein Verstopfen der Pipettiernadel, welches ein aufwändiges Waschprozedere oder schlimmstenfalls den Austausch der Pipettiernadel erfordert und damit einen Ausfall des betroffenen Analysegeräts zur Folge hat, reduzieren den Probendurchsatz des Laboranalysesystems.

Es ist daher wünschenswert ein Laboranalysesystem der eingangs beschriebenen Art so zu modifizieren, dass eine Verminderung des Probendurchsatzes durch Pipettierfehler bei der Probenentnahme in einem Analysegerät vermieden wird.

Diese Aufgabe wird dadurch gelöst, dass Probengefäß-spezifische Informationen, die in der Bildauswertevorrichtung der Bildaufnahmestation ermittelt werden, an ein, mehrere oder alle Analysegeräte des Laboranalysesystem übermittelt werden und im jeweiligen Analysegerät anhand dieser Probengefäß-spezifischen Informationen Probengefäß-spezifische Parameter für den Betrieb der Pipettiervorrichtung bei der Entnahme eines Probenflüssigkeitsvolumens aus einem spezifischen Probengefäß ermittelt werden. Insbesondere wird die Aufgabe dadurch gelöst, dass für jedes Probengefäß die Füllstandhöhe der Probenflüssigkeit und/oder sofern vorhanden die Höhe von Trennschichten innerhalb der Probenflüssigkeit als Probengefäß-spezifische Parameter in der Bildaufnahmestation ermittelt und an die Steuereinheit des jeweiligen Analysegeräts übermittelt werden, wo dann für jedes individuelle Probengefäß der maximale senkrechte Verfahrweg der Pipettiernadel für die Positionierung der Pipettiernadel in einer Entnahmeposition ermittelt wird. Dadurch wird sichergestellt, dass aus jedem Probengefäß nur die für eine Analyse geeignete Probenflüssigkeit entnommen wird und damit auch eine Verstopfung der Pipettiernadel vermieden wird.

Die vorliegende Erfindung betrifft also ein Laboranalysesystem umfassend
a. eine Mehrzahl von Analysegeräten, wobei jedes Analysegerät eine Steuereinheit, mindestens eine Pipettiervorrichtung mit einer senkrecht verfahrbaren Pipettiernadel zur Entnahme eines Probenflüssigkeitsvolumens aus einem Probengefäß und mindestens eine Analysevorrichtung zur Analyse einer Probenflüssigkeit aufweist;
b. eine Bildaufnahmestation zur Aufnahme von Bildern von mit Probenflüssigkeit gefüllten Probengefäßen und eine dazugehörige Bildauswertevorrichtung; und
c. eine Transportvorrichtung für Probengefäße, an die alle Analysegeräte und die Bildaufnahmestation angebunden sind.

Das erfindungsgemäße Laboranalysesystem umfasst ferner eine Datenübertragungsvorrichtung, mit der Probengefäß-spezifische Informationen aus der Bildauswertevorrichtung an die Steuereinheit mindestens eines Analysegerätes übermittelbar sind, wobei die Steuereinheit des mindestens einen Analysegerätes, an die Probengefäß-spezifische Informationen aus der Bildauswertevorrichtung übermittelbar sind, so konfiguriert ist, dass sie ein Verfahren mit den folgenden Schritten steuert:
- Auswerten der Probengefäß-spezifischen Informationen aus der Bildauswertevorrichtung und Ermitteln eines oder mehrerer Probengefäß-spezifischer Parameter für den Betrieb der Pipettiervorrichtung bei der Entnahme eines Probenflüssigkeitsvolumens aus einem spezifischen Probengefäß, und
- Steuerung des Betriebs der Pipettiervorrichtung bei der Entnahme eines Probenflüssigkeitsvolumens aus einem spezifischen Probengefäß durch Anwendung der ermittelten Probengefäß-spezifischen Parameter,
wobei die Probengefäß-spezifischen Informationen, die von der Bildauswertevorrichtung an die Steuereinheit des mindestens einen Analysegerätes übermittelbar sind, ausgewählt sind aus der Gruppe Füllstandhöhe der Probenflüssigkeit und Höhe von Trennschichten innerhalb der Probenflüssigkeit und wobei ein Parameter, der für den Betrieb der Pipettiervorrichtung bei der Entnahme eines Probenflüssigkeitsvolumens aus einem spezifischen Probengefäß ermittelt wird, der maximale senkrechte Verfahrweg der Pipettiernadel für die Positionierung der Pipettiernadel in einer Entnahmeposition ist.

Mit der für jedes Probengefäß spezifischen Festlegung des maximalen senkrechten Verfahrwegs der Pipettiernadel für die Positionierung der Pipettiernadel in einer Entnahmeposition wird die maximale Eintauchtiefe in die Probenflüssigkeit vorgegeben. Auf diese Weise wird erreicht, dass ein Eindringen der Pipettiernadel in Schichten, wie beispielsweise in eine Blutkuchenschicht, die klumpiges Material enthält oder in eine Trennmittelschicht, die praktisch keine Patientenprobe enthält, vermieden wird, wodurch wiederum sichergestellt wird, dass nicht analysierbare Probenbestandteile nicht entnommen werden.

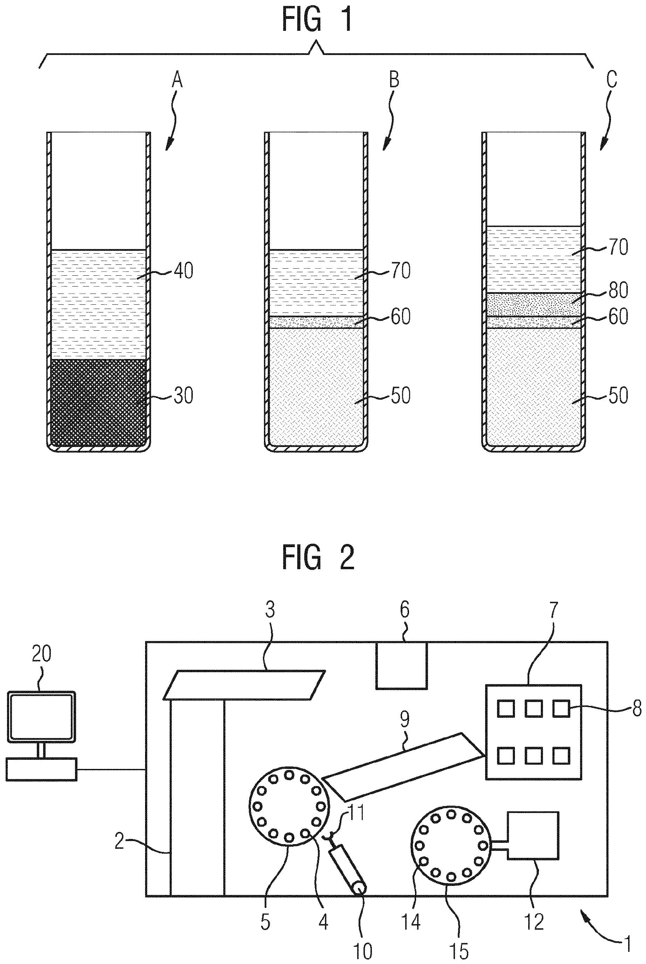

Die typischen Schichtungen in Probengefäßen (z.B. in Blutentnahmeröhrchen), in die Vollblut gefüllt und unterschiedlich behandelt wurde, sind in FIG. 1 gezeigt.

Für die Gewinnung von Serum wird das Vollblut in ein Röhrchen ohne Gerinnungshemmer gefüllt, so dass das Blut nach einiger Zeit gerinnt. Durch Stehenlassen oder Zentrifugation sedimentieren die festen Bestandteile des Gerinnsels am Boden des Röhrchens und bilden die sogenannte Blutkuchenschicht. Das Serum befindet sich als Überstand oberhalb der Blutkuchenschicht. Insbesondere wenn ein erfindungsgemäßes Laboranalysesystem ein oder mehrere Analysegeräte umfasst, die für die Analyse von Serumproben vorgesehen sind, ist vorteilhafterweise die Bildaufnahmestation zur Aufnahme von Bildern von mit geronnenem, sedimentiertem Blut gefüllten Probengefäßen vorgesehen, und die Probengefäß-spezifische Information, die von der Bildauswertevorrichtung an die Steuereinheit des mindestens einen Analysegerätes übermittelbar ist, ist die Höhe der Blutkuchenschicht. Die Probengefäß-spezifische Information über die Höhe der Blutkuchenschicht wird dann in der Steuereinheit des Analysegeräts verwendet, um für das spezifische Probengefäß den maximalen senkrechten Verfahrweg der Pipettiernadel und damit die maximale Eintauchtiefe für die Pipettiernadel festzulegen. Der maximale senkrechte Verfahrweg der Pipettiernadel wird so gewählt, dass die Pipettiernadelspitze in der Entnahmeposition, also wenn Probenflüssigkeit aus dem Probengefäß entnommen wird, oberhalb der Blutkuchenschicht positioniert ist.

Für die Gewinnung von Plasma wird das Vollblut in ein Röhrchen mit einem Gerinnungshemmer gefüllt, so dass das Blut ungerinnbar gemacht wird. Durch Stehenlassen oder Zentrifugation sedimentieren die festen Zellbestandteile des Bluts am Boden des Röhrchens und bilden eine untere dickere Schicht aus Erythrocyten und eine darüberliegende dünnere Schicht aus Leukocyten und Plättchen, die sogenannte Buffy-Coat-Schicht. Das Plasma befindet sich als Überstand oberhalb der Buffy-Coat-Schicht. Insbesondere wenn ein erfindungsgemäßes Laboranalysesystem ein oder mehrere Analysegeräte umfasst, die für die Analyse von Plasmaproben vorgesehen sind, ist vorteilhafterweise die Bildaufnahmestation zur Aufnahme von Bildern von mit ungerinnbar gemachtem, sedimentiertem Blut gefüllten Probengefäßen vorgesehen und die Probengefäß-spezifische Information, die von der Bildauswertevorrichtung an die Steuereinheit des mindestens einen Analysegerätes übermittelbar ist, ist die Höhe der Buffy-Coat-Schicht. Die Probengefäß-spezifische Information über die Höhe der Buffy-Coat-Schicht wird dann in der Steuereinheit des Analysegeräts verwendet, um für das spezifische Probengefäß den maximalen senkrechten Verfahrweg der Pipettiernadel und damit die maximale Eintauchtiefe für die Pipettiernadel festzulegen. Der maximale senkrechte Verfahrweg der Pipettiernadel wird so gewählt, dass die Pipettiernadelspitze in der Entnahmeposition, also wenn Probenflüssigkeit aus dem Probengefäß entnommen wird, oberhalb der Buffy-Coat-Schicht positioniert ist.

Bei der Gewinnung von Serum oder Plasma kommen auch häufig Trennmittel, z.B. Trenngele zum Einsatz. Diese werden mit der Vollblutprobe vermischt und bilden nach der Sedimentation eine stabile Trennmittel-Schicht zwischen Serum und Blutkuchen beziehungsweise zwischen Plasma und Buffy-Coat-Schicht aus. Daher ist in den vorgenannten Laboranalysesystemen die Bildaufnahmestation vorteilhafterwiese auch zur Aufnahme von Bildern von sedimentiertem und mit einem Trennmittel vermischtem Blut gefüllten Probengefäßen vorgesehen, und die Probengefäß-spezifische Information, die von der Bildauswertevorrichtung an die Steuereinheit des mindestens einen Analysegerätes übermittelbar ist, ist die Höhe der Trennmittel-Schicht. Die Probengefäß-spezifische Information über die Höhe der Trennmittel-Schicht wird dann in der Steuereinheit des Analysegeräts verwendet, um für das spezifische Probengefäß den maximalen senkrechten Verfahrweg der Pipettiernadel und damit die maximale Eintauchtiefe für die Pipettiernadel festzulegen. Der maximale senkrechte Verfahrweg der Pipettiernadel wird so gewählt, dass die Pipettiernadelspitze in der Entnahmeposition, also wenn Probenflüssigkeit aus dem Probengefäß entnommen wird, oberhalb der Trennmittel-Schicht positioniert ist.

Die Bildaufnahmestation kann eine oder mehrere Kameras enthalten, die ein oder mehrere Bilder von jedem (durchsichtigen) Probengefäß macht. Mit einer Bildauswertevorrichtung, die über eine Bildverarbeitungs- und eine Bildauswertungssoftware verfügt, wird jedes Bild analysiert, und es wird die Füllstandhöhe der Probenflüssigkeit in einem Probengefäß und -sofern Trennschichten identifiziert wurden- die Höhe von Trennschichten innerhalb der Probenflüssigkeit ermittelt.

In einer Ausführungsform des erfindungsgemäßen Laboranalysesystems ist die Datenübertragungsvorrichtung, mit der Probengefäß-spezifische Informationen aus der Bildauswertevorrichtung an die Steuereinheit des mindestens einen Analysegerätes übermittelbar sind, eine direkte Verbindung zwischen Bildauswertevorrichtung und Steuereinheit des Analysegerätes.

Alternativ kann jedoch auch vorgesehen sein, dass die Datenübertragungsvorrichtung, mit der Probengefäß-spezifische Informationen aus der Bildauswertevorrichtung an die Steuereinheit mindestens eines Analysegerätes übermittelbar sind, eine zentrale Steuereinheit umfasst, die mit allen Analysegeräten, mit der Bildaufnahmestation und mit der Transportvorrichtung für Probengefäße verbunden ist. Bei einer derartigen zentralen Steuereinheit kann es sich beispielsweise um einen oder mehrere Computer mit entsprechender Software handeln.

Ein weiterer Gegenstand der vorliegenden Erfindung ist ein automatisches Analysegerät, das so angepasst ist, dass es sich zur Einbindung in ein erfindungsgemäßes Laboranalysesystem eignet. Ein erfindungsgemäßes Analysegerät umfasst eine Steuereinheit, mindestens eine Pipettiervorrichtung mit einer senkrecht verfahrbaren Pipettiernadel zur Entnahme eines Probenflüssigkeitsvolumens aus einem Probengefäß, mindestens eine Analysevorrichtung zur Analyse einer Probenflüssigkeit und einen Anschluss zur Anbindung an eine Transportvorrichtung für Probengefäße. Die Steuereinheit weist einen Anschluss, z.B. eine Schnittstelle, für eine Datenübertragungsvorrichtung auf, mit der Probengefäß-spezifische Informationen aus einer Bildauswertevorrichtung an die Steuereinheit des Analysegerätes übermittelbar sind, und ist so konfiguriert ist, dass sie ein Verfahren mit den folgenden Schritten steuert:
- Auswerten der Probengefäß-spezifischen Informationen aus der Bildauswertevorrichtung und Ermitteln eines oder mehrerer Probengefäß-spezifischer Parameter für den Betrieb der Pipettiervorrichtung bei der Entnahme eines Probenflüssigkeitsvolumens aus einem spezifischen Probengefäß, und
- Steuerung des Betriebs der Pipettiervorrichtung bei der Entnahme eines Probenflüssigkeitsvolumens aus einem spezifischen Probengefäß durch Anwendung der ermittelten Probengefäß-spezifischen Parameter,
wobei die Probengefäß-spezifischen Informationen, die von der Bildauswertevorrichtung an die Steuereinheit des Analysegerätes übermittelbar sind, ausgewählt sind aus der Gruppe Füllstandhöhe der Probenflüssigkeit und Höhe von Trennschichten innerhalb der Probenflüssigkeit und wobei ein Parameter, der für den Betrieb der Pipettiervorrichtung bei der Entnahme eines Probenflüssigkeitsvolumens aus einem spezifischen Probengefäß ermittelt wird, der maximale senkrechte Verfahrweg der Pipettiernadel für die Positionierung der Pipettiernadel in einer Entnahmeposition ist.

Bevorzugterweise ist die Steuereinheit des Analysegeräts so konfiguriert, dass das Auswerten der Probengefäß-spezifischen Information aus der Bildauswertevorrichtung und das Ermitteln eines oder mehrerer Probengefäß-spezifischer Parameter für den Betrieb der Pipettiervorrichtung bei der Entnahme eines Probenflüssigkeitsvolumens aus einem spezifischen Probengefäß das Auswerten der Höhe der Blutkuchenschicht, der Höhe der Buffy-Coat-Schicht oder der Höhe der Trennmittel-Schicht und das Ermitteln der Höhe der Entnahmeposition bei der Entnahme eines Probenflüssigkeitsvolumens aus einem spezifischen Probengefäß umfasst.

Ebenfalls bevorzugterweise ist die Steuereinheit des Analysegeräts so konfiguriert, dass der maximale senkrechte Verfahrweg der Pipettiernadel für die Positionierung der Pipettiernadel in einer Entnahmeposition aus einem spezifischen Probengefäß so gewählt wird, dass die Entnahmeposition oberhalb der Höhe der Blutkuchenschicht, der Höhe der Buffy-Coat-Schicht oder der Höhe der Trennmittel-Schicht in dem spezifischen Probengefäß liegt.

Die Erfindung wird im Folgenden anhand einer Zeichnung erläutert.

Darin zeigen
- FIG. 1: Probengefäße mit Probenflüssigkeiten;
- FIG. 2: ein erfindungsgemäßes automatisches Analysegerät 1;
- FIG. 3: ein erfindungsgemäßes Laboranalysesystem 100.

Gleiche Teile sind in allen Figuren mit denselben Bezugszeichen versehen.

FIG. 1 ist eine schematische Darstellung dreier Probengefäße (A, B, C), die behandeltes Vollblut enthalten, das je nach Behandlung unterschiedliche Schichten ausbildet, die durch Phasengrenzen getrennt sind. Probengefäß A enthält eine Gerinnungshemmer-freie und daher geronnene Vollblutprobe, die kurz zentrifugiert wurde. Die festen Bestandteile sedimentieren am Boden des Röhrchens und bilden die sogenannte Blutkuchenschicht 30. Das Serum 40 befindet sich als Überstand oberhalb der Blutkuchenschicht. Um die Entnahme von Serum 40 sicherzustellen und eine Entnahme von Material aus der Blutkuchenschicht 30 sicher auszuschließen, muss als maximale Eintauchtiefe einer Pipettiernadel eine Höhe oberhalb der Höhe der Blutkuchenschicht 30 gewählt werden. Probengefäß B enthält eine antikoagulierte Vollblutprobe, die kurz zentrifugiert wurde. Die zellulären Bestandteile sedimentieren am Boden des Röhrchens und bilden eine erste Schicht aus Erythrocyten 50 und eine darüberliegende dünnere Schicht aus Leukocyten und Plättchen, die sogenannte Buffy-Coat-Schicht 60. Das Plasma 70 befindet sich als Überstand oberhalb der Buffy-Coat-Schicht 60. Um die Entnahme von Plasma 70 sicherzustellen und eine Entnahme von Material aus der Buffy-Coat-Schicht 60 oder aus der Erythrocyten-Schicht 50 sicher auszuschließen, muss als maximale Eintauchtiefe einer Pipettiernadel eine Höhe oberhalb der Höhe der Buffy-Coat-Schicht 60 gewählt werden. Probengefäß C enthält eine antikoagulierte Vollblutprobe, die mit einem Trenngel vermischt wurde und kurz zentrifugiert wurde. Die zellulären Bestandteile sedimentieren am Boden des Röhrchens und bilden eine erste Schicht aus Erythrocyten 50 und eine darüberliegende dünnere Buffy-Coat-Schicht 60. Zwischen der Buffy-Coat-Schicht 60 und dem Überstand aus Plasma 70 befindet sich eine Schicht aus Trenngel 80. Um die Entnahme von Plasma 70 sicherzustellen und eine Entnahme von Material aus der Trenngel-Schicht 80, der Buffy-Coat-Schicht 60 oder aus der Erythrocyten-Schicht 50 sicher auszuschließen, muss als maximale Eintauchtiefe einer Pipettiernadel eine Höhe oberhalb der Höhe der Trenngel-Schicht 80 gewählt werden.

FIG. 2 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blutplasma, Blutserum oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben (Primärproben) werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden oder durch ein Laborinformationssystem an das Analysegerät 1 übermittelt werden. Aus den Probengefäßen werden mit Hilfe einer an einem Transferarm befestigten ersten Pipettiervorrichtung 3 Probenaliquots mittels einer senkrecht verfahrbaren Pipettiernadel entnommen. Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen.

In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in die Küvette, die bereits das Probenaliquot enthält, abgegeben. Die Küvette mit dem Testansatz wird von einem Transferarm 10 mit einem Klemmgreifer 11 von der Inkubationseinrichtung 5 in eine Aufnahmeposition 14 der drehbaren Aufnahmevorrichtung 15 für die photometrische Messstation 12 transportiert, wo die Extinktion des Reaktionsansatzes gemessen wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

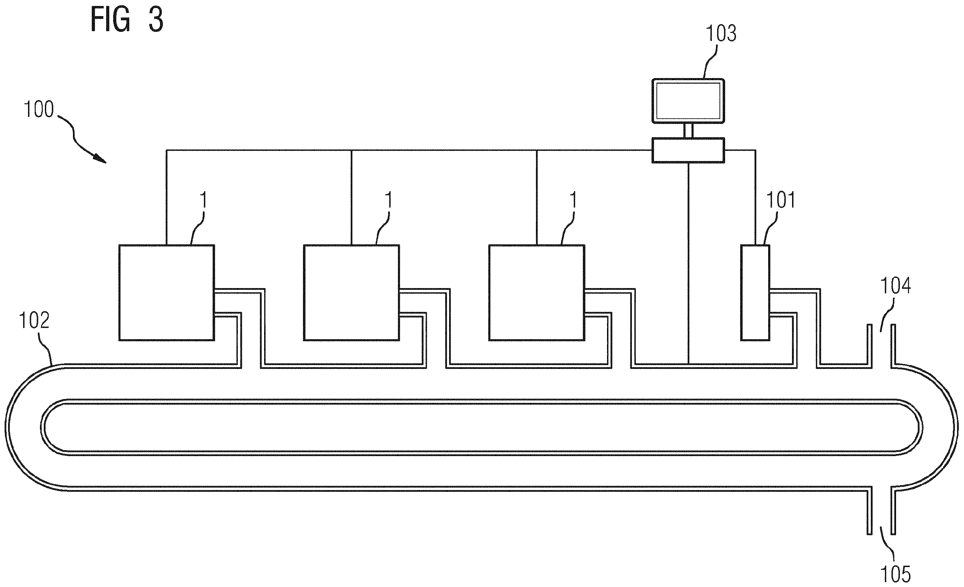

FIG. 3 zeigt ein erfindungsgemäßes Laboranalysesystem 100 mit drei Analysegeräten 1, einer Bildaufnahmestation 101 und einer Transportvorrichtung 102 für Probengefäße, an die alle Analysegeräte 1 und die Bildaufnahmestation 101 angebunden sind. Das Laboranalysesystem 100 verfügt ferner über eine zentrale Steuereinheit 103 in Form eines Rechners, der mit allen wesentlichen Komponenten des Laboranalysesystems verbunden ist. Über eine Zuführungsstation 104 werden der Transportvorrichtung 102 nicht näher dargestellte Schlitten oder Gestelle, in den ein oder mehrere Probengefäße angeordnet sind, zugeführt. Die Schlitten mit den Probengefäßen werden auf einem Transportband der Transportvorrichtung 102 zunächst in Richtung der Bildaufnahmestation 101 transportiert. In der Bildaufnahmestation 101 werden die Barcodes, die auf den durchsichtigen Probengefäßen angebracht sind, mit Hilfe eines Barcode-Scanners ausgelesen, und mit einer Kamera wird mindestens ein Bild von jedem flüssigkeitsgefüllten Probengefäß aufgenommen. Mit einer Bildauswertevorrichtung, die über eine Bildverarbeitungs- und eine Bildauswertungssoftware verfügt, wird jedes Bild analysiert, und es wird die Füllstandhöhe der Probenflüssigkeit in einem Probengefäß und -sofern Trennschichten identifiziert wurdendie Höhen von Trennschichten innerhalb der Probenflüssigkeit ermittelt.

Die ermittelte Füllstandhöhe der Probenflüssigkeit in einem Probengefäß und -sofern Trennschichten identifiziert wurdendie Höhen der Trennschichten innerhalb der Probenflüssigkeit werden für jedes Probengefäß der Bildaufnahmestation 101 über eine Datenleitung an die zentrale Steuereinheit 103 übermittelt, die diese Probengefäß-spezifischen Daten wiederum zusammen mit Analyseaufträgen an eines oder mehrere der Analysegeräte 1 weiterleitet.

Nach der Identifikation und der optischen Analyse der Probengefäße in der Bildaufnahmestation 101 werden die Schlitten mit den Probengefäßen wieder auf das Transportband der Transportvorrichtung 102 zurückgeführt und weiter in Richtung der Analysegeräte 1 transportiert. Über eine Zuführungsschiene werden die Schlitten mit den Probengefäßen einem Analysegerät 1 zugeführt. In dem Analysegerät 1 wird zunächst der Barcode jedes Probengefäßes ausgelesen, und es wird geprüft, welche Analyseaufträge und welche Probengefäß-spezifischen Informationen aus der Bildauswertevorrichtung der Bildaufnahmestation 101 in der Steuereinheit 20 des Analysegeräts 1 vorliegen. Aus den Probengefäß-spezifischen Informationen aus der Bildauswertevorrichtung wird unter Berücksichtigung gerätespezifischer Größen ermittelt, wie die Pipettiervorrichtung betrieben werden muss, um bei der Entnahme von Probenflüssigkeit sicherzustellen, dass nur gewünschtes Probenmaterial (Plasma oder Serum) entnommen wird und eine Entnahme von unerwünschtem Material aus anderen Schichten sicher auszuschließen. Dazu wird der maximale senkrechte Verfahrweg der Pipettiernadel als Betriebsparameter für die Pipettiervorrichtung berechnet, um die maximale Eintauchtiefe der Pipettiernadel auf einer Höhe oberhalb der Höhe der obersten Störschicht festzulegen. Anschließend wird unter Anwendung des zuvor ermittelten Betriebsparameters mit Hilfe der Pipettiervorrichtung ein gewünschtes Probenvolumen aus dem Probengefäß entnommen und in dem Analysegerät 1 weiter prozessiert. Nach Entnahme der Probenaliquots wird der Schlitten mit den Probengefäßen wieder auf das Transportband der Transportvorrichtung 102 zurückgeführt und weiter in Richtung weiterer Analysegeräte 1 transportiert beziehungsweise in Richtung einer Austrittsstation 105.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Transferarm
- 11: Klemmgreifer
- 12: Messstation
- 14: Aufnahmeposition
- 15: Aufnahmevorrichtung
- 20: Steuereinheit

- 30: Blutkuchenschicht
- 40: Serum
- 50: Erythrocyten-Schicht
- 60: Buffy-Coat-Schicht
- 70: Plasma
- 80: Trenngel-Schicht

- 100: Laboranalysesystem
- 101: Bildaufnahmestation
- 102: Transportvorrichtung
- 103: zentrale Steuereinheit
- 104: Zuführungsstaion
- 105: Austrittsstation

## Patentansprüche

1. Laboranalysesystem (100) umfassend
a. eine Mehrzahl von Analysegeräten (1), wobei jedes Analysegerät (1) eine Steuereinheit (20), mindestens eine Pipettiervorrichtung (3) mit einer senkrecht verfahrbaren Pipettiernadel zur Entnahme eines Probenflüssigkeitsvolumens aus einem Probengefäß und mindestens eine Analysevorrichtung (12) zur Analyse einer Probenflüssigkeit aufweist;
b. eine Bildaufnahmestation (101) zur Aufnahme von Bildern von mit Probenflüssigkeit gefüllten Probengefäßen und eine dazugehörige Bildauswertevorrichtung; und
c. eine Transportvorrichtung (102) für Probengefäße, an die alle Analysegeräte (1) und die Bildaufnahmestation (101) angebunden sind,
**dadurch gekennzeichnet, dass** das Laboranalysesystem (100) ferner eine Datenübertragungsvorrichtung, mit der Probengefäß-spezifische Informationen aus der Bildauswertevorrichtung an die Steuereinheit (20) mindestens eines Analysegerätes (1) übermittelbar sind, umfasst und wobei die Steuereinheit (20) des mindestens einen Analysegerätes (1), an die Probengefäß-spezifische Informationen aus der Bildauswertevorrichtung übermittelbar sind, so konfiguriert ist, dass sie ein Verfahren mit den folgenden Schritten steuert:
• Auswerten der Probengefäß-spezifischen Informationen aus der Bildauswertevorrichtung und Ermitteln eines oder mehrerer Probengefäß-spezifischer Parameter für den Betrieb der Pipettiervorrichtung (3) bei der Entnahme eines Probenflüssigkeitsvolumens aus einem spezifischen Probengefäß, und
• Steuerung des Betriebs der Pipettiervorrichtung (1) bei der Entnahme eines Probenflüssigkeitsvolumens aus einem spezifischen Probengefäß durch Anwendung der ermittelten Probengefäß-spezifischen Parameter,
wobei die Probengefäß-spezifischen Informationen, die von der Bildauswertevorrichtung an die Steuereinheit (20) des mindestens einen Analysegerätes (1) übermittelbar sind, ausgewählt sind aus der Gruppe Füllstandhöhe der Probenflüssigkeit und Höhe von Trennschichten innerhalb der Probenflüssigkeit und wobei ein Parameter, der für den Betrieb der Pipettiervorrichtung (3) bei der Entnahme eines Probenflüssigkeitsvolumens aus einem spezifischen Probengefäß ermittelt wird, der maximale senkrechte Verfahrweg der Pipettiernadel für die Positionierung der Pipettiernadel in einer Entnahmeposition ist.

2. Laboranalysesystem (100) gemäß Anspruch 1, wobei die Bildaufnahmestation (101) zur Aufnahme von Bildern von mit geronnenem, sedimentiertem Blut gefüllten Probengefäßen vorgesehen ist und die Probengefäß-spezifische Information, die von der Bildauswertevorrichtung an die Steuereinheit (20) des mindestens einen Analysegerätes (1) übermittelbar ist, die Höhe der Blutkuchenschicht (30) ist.

3. Laboranalysesystem (100) gemäß Anspruch 1, wobei die Bildaufnahmestation (101) zur Aufnahme von Bildern von mit ungerinnbar gemachtem, sedimentiertem Blut gefüllten Probengefäßen vorgesehen ist und die Probengefäß-spezifische Information, die von der Bildauswertevorrichtung an die Steuereinheit (20) des mindestens einen Analysegerätes (1) übermittelbar ist, die Höhe der Buffy-Coat-Schicht (60) ist.

4. Laboranalysesystem (100) gemäß Anspruch 1, wobei die Bildaufnahmestation (101) zur Aufnahme von Bildern von sedimentiertem und mit einem Trennmittel vermischtem Blut gefüllten Probengefäßen vorgesehen ist und die Probengefäß-spezifische Information, die von der Bildauswertevorrichtung an die Steuereinheit (20) des mindestens einen Analysegerätes (1) übermittelbar ist, die Höhe der Trennmittel-Schicht (80) ist.

5. Laboranalysesystem (100) gemäß einem der Ansprüche 2 bis 4, wobei der maximale senkrechte Verfahrweg der Pipettiernadel für die Positionierung der Pipettiernadel in einer Entnahmeposition aus einem spezifischen Probengefäß so gewählt wird, dass die Entnahmeposition oberhalb der Höhe der Blutkuchenschicht (30), der Buffy-Coat-Schicht (60) oder der Trennmittel-Schicht (80) in dem spezifischen Probengefäß liegt.

6. Laboranalysesystem (100) gemäß einem der vorhergehenden Ansprüche, bei dem die Datenübertragungsvorrichtung, mit der Probengefäß-spezifische Informationen aus der Bildauswertevorrichtung an die Steuereinheit (20) des mindestens einen Analysegerätes (1) übermittelbar sind, eine direkte Verbindung zwischen Bildauswertevorrichtung und Steuereinheit (20) des Analysegerätes (1) ist.

7. Laboranalysesystem (100) gemäß einem der Ansprüche 1 bis 5, bei dem die Datenübertragungsvorrichtung, mit der Probengefäß-spezifische Informationen aus der Bildauswertevorrichtung an die Steuereinheit (20) mindestens eines Analysegerätes (1) übermittelbar sind, eine zentrale Steuereinheit (103) umfasst, die mit allen Analysegeräten (1), mit der Bildaufnahmestation (101) und mit der Transportvorrichtung (102) für Probengefäße verbunden ist.

8. Automatisches Analysegerät (1) mit einer Steuereinheit (20), mit mindestens einer Pipettiervorrichtung (3) mit einer senkrecht verfahrbaren Pipettiernadel zur Entnahme eines Probenflüssigkeitsvolumens aus einem Probengefäß, mit mindestens einer Analysevorrichtung (12) zur Analyse einer Probenflüssigkeit und mit einem Anschluss zur Anbindung eine Transportvorrichtung (102) für Probengefäße, **dadurch gekennzeichnet, dass** die Steuereinheit (20), ferner einen Anschluss für eine Datenübertragungsvorrichtung, mit der Probengefäß-spezifische Informationen aus einer Bildauswertevorrichtung an die Steuereinheit (20) des Analysegerätes (1) übermittelbar sind, aufweist und die Steuereinheit (20) so konfiguriert ist, dass sie ein Verfahren mit den folgenden Schritten steuert:
• Auswerten der Probengefäß-spezifischen Informationen aus der Bildauswertevorrichtung und Ermitteln eines oder mehrerer Probengefäß-spezifischer Parameter für den Betrieb der Pipettiervorrichtung (3) bei der Entnahme eines Probenflüssigkeitsvolumens aus einem spezifischen Probengefäß, und
• Steuerung des Betriebs der Pipettiervorrichtung (3) bei der Entnahme eines Probenflüssigkeitsvolumens aus einem spezifischen Probengefäß durch Anwendung der ermittelten Probengefäß-spezifischen Parameter,
wobei die Probengefäß-spezifischen Informationen, die von der Bildauswertevorrichtung an die Steuereinheit (20) des Analysegerätes (1) übermittelbar sind, ausgewählt sind aus der Gruppe Füllstandhöhe der Probenflüssigkeit und Höhe von Trennschichten innerhalb der Probenflüssigkeit und wobei ein Parameter, der für den Betrieb der Pipettiervorrichtung (3) bei der Entnahme eines Probenflüssigkeitsvolumens aus einem spezifischen Probengefäß ermittelt wird, der maximale senkrechte Verfahrweg der Pipettiernadel für die Positionierung der Pipettiernadel in einer Entnahmeposition ist.

9. Automatisches Analysegerät (1) gemäß Anspruch 8, wobei das Auswerten der Probengefäß-spezifischen Informationen aus der Bildauswertevorrichtung und das Ermitteln eines oder mehrerer Probengefäß-spezifischer Parameter für den Betrieb der Pipettiervorrichtung (3) bei der Entnahme eines Probenflüssigkeitsvolumens aus einem spezifischen Probengefäß das Auswerten der Höhe der Blutkuchenschicht (30), der Höhe der Buffy-Coat-Schicht (60) oder der Höhe der Trennmittel-Schicht (80) und das Ermitteln der Höhe der Entnahmeposition bei der Entnahme eines Probenflüssigkeitsvolumens aus einem spezifischen Probengefäß umfasst.

10. Automatisches Analysegerät (1) gemäß Anspruch 9, wobei der maximale senkrechte Verfahrweg der Pipettiernadel für die Positionierung der Pipettiernadel in einer Entnahmeposition aus einem spezifischen Probengefäß so gewählt wird, dass die Entnahmeposition oberhalb der Höhe der Blutkuchenschicht (30), der Höhe der Buffy-Coat-Schicht (60) oder der Höhe der Trennmittel-Schicht (80) in dem spezifischen Probengefäß liegt.
